# EUROPEAN PATENT SPECIFICATION

(11) **EP 2 518 293 B1**
(45) Date of publication and mention of the grant of the patent: **28.09.2016**
(21) Application number: 12165824.9
(22) Date of filing: 26.04.2012
(51) Int. Cl.: F02C 3/14, F02K 3/06, F02K 3/12, F02K 3/077, F02C 9/18

(54) **Multiple core variable cycle gas turbine engine and method of operation**
Gasturbinenmotor mit mehrfachen Kerntriebwerke und Betriebsverfahren
Moteur à turbine à gaz à cycle variable multi-noyaux et procédé de fonctionnement

(30) Priority: 29.04.2011 US 201113097600
(43) Date of publication of application: 31.10.2012
(73) Proprietor: United Technologies Corporation, Farmington, CT 06032 (US)
(72) Inventor: Norris, James W., Lebanon, CT Connecticut 06249 (US)
(74) Representative: Taylor, Adam David

(56) References cited:
- GB-A- 1 020 145
- US-A1- 2007 277 500
- US-A1- 2008 155 961

## Description

### BACKGROUND

The present invention relates to gas turbine engines and associated methods of operation.

A typical gas turbine engine provides a generally axial flow of fluids through the engine, with those fluids entering a forward inlet of the engine and exiting an aft exhaust outlet while following a path that always extends generally rearward (or in a radial direction). Radial flow engines, for example where air is diverted in a direction perpendicular to an engine centerline, are also known. However, reverse-flow gas turbine engines are also known where a primary flowpath of the engine "reverses" whereby a portion of that flowpath is turned so as to travel forward through the engine before being turned again to exit a generally aft portion of the engine.

Gas turbine engines, whether of the axial flow, radial flow, or reverse flow variety, generally use shafts to rotationally link different sections of the engine (e.g., a low pressure compressor section and a low pressure turbine section). Rotationally linked sections are commonly referred to in the art as "spools". As engine efficiency increases allow the size of engine components to be reduced to produce the same power/thrust output, engine designs approach limits on the provision of spool shafts. Specifically, shaft diameters, particularly that of a low pressure spool, can only be reduced to a certain point before critical speeds become an issue. Shaft critical speed is proportional to shaft diameter and inversely proportional to the square of the shaft length. In addition, a shaft of smaller diameter may be incapable of carrying torque supplied by the low pressure turbine to the fan. A reduction of diameter may be accompanied by rotor support bearing packaging issues so that the reduction in length may not be sufficient to allow a required critical speed margin.

Furthermore, different engine sections have different operational efficiencies. Engine core efficiency increases with temperature and pressure. Engine propulsors (fans) become more efficient at lower pressure ratios and become more efficient at relatively low power levels (i.e., relatively low throttle levels), while engine cores (e.g., a high pressure section of the engine including a compressor section, combustor, and turbine section) typically operate at relatively high efficiency at relatively high power levels with high temperatures and pressures (i.e., relatively high throttle levels). Because different sections of prior art gas turbine engines are bound to some fixed rotational relationship (e.g., a given throttle setting produces a given operational power level from both the fan section and the core), this results in a tradeoff. In the aerospace context, an aircraft's gas turbine engine(s) will generally have relatively low fan efficiency and relatively high core efficiency during takeoff (or other relatively high throttle conditions), and have relatively high fan efficiency and relatively low core efficiency for cruise (or loiter) conditions (or other relatively low throttle conditions).

In addition, engine cores of gas turbine engines are sized to meet the particular power requirements of the overall engine system being built. Designing and testing different size cores is a time consuming and expensive undertaking.

Patent G.B. 1 020 145 discloses a power plant comprising a plurality of gas turbine type gas generators, each of which comprises an axial-flow compressor, combustion equipment and turbine flow in series, there being a common compressor arranged to supply part of the air compressed thereby to all the axial-flow compressors of the gas generators.

### SUMMARY

A gas turbine engine system according to the present invention includes a fan assembly, a low pressure compressor, a low pressure turbine, a plurality of engine cores including a first engine core and a second engine core, a control assembly and an exhaust collector. A primary flowpath is defined through the fan assembly, the low pressure compressor, the low pressure turbine, and the active engine cores. Each engine core includes a high pressure compressor, a combustor downstream from the high pressure compressor, and a high pressure turbine downstream from the combustor. The control assembly is configured to control operation of the plurality of engine cores such that in a first operational mode the first and the second engine cores are active to generate combustion products and in a second operational mode the first engine core is active to generate combustion products while the second engine core is idle. The exhaust collector defines a substantially toroidal interior volume, wherein exhaust from all active engine cores is delivered to the exhaust collector. The plurality of engine cores delivers combustion products to the exhaust collector in a tangential orientation to produce an annular exhaust mixing flow. A method of operating a gas turbine engine is also disclosed.

Preferred embodiments of the invention will now be described by way of example and with reference to the accompanying drawings.

### BRIEF DESCRIPTION OF THE DRAWINGS

FIG. 1 is a schematic cross-sectional view of a gas turbine engine according to an embodiment of the present invention.
FIGS. 2A and 2B are block diagrams illustrating two different embodiments of the gas turbine engine.
FIG. 3A is a partial cross-section perspective view of the gas turbine engine having one embodiment of a core assembly.
FIG. 3B is an enlarged perspective view of the embodiment of the core assembly of FIG. 3A, shown in isolation.
FIG. 4 is an exploded perspective view of portions of the core assembly of FIGS. 3A and 3B.
FIG. 5 is a perspective view of another embodiment of a core assembly for the gas turbine engine.
FIG. 6 is a partial cross-section perspective view of the gas turbine engine having yet another embodiment of a core assembly.

### DETAILED DESCRIPTION

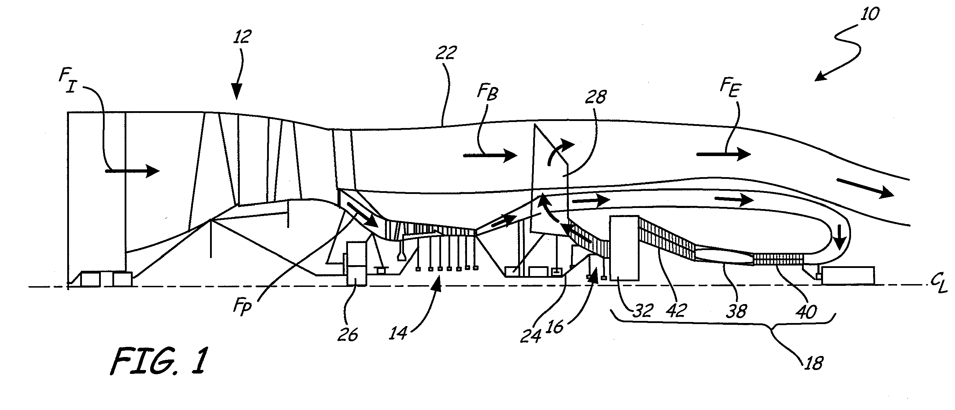

FIG. 1 is a schematic cross-sectional view of a top half of a gas turbine engine 10 having a fan section 12, a low pressure compressor section 14, a low pressure turbine section 16, an engine core assembly 18, exhaust pipes 28, and a bypass duct 22. Using suitable ductwork, the engine 10 can route fluid along a primary flowpath F_{P} through the fan section 12, low pressure compressor section 14, the engine core assembly 18, and the low pressure turbine section 16 to produce thrust. The engine 10 can have some similarities to the reverse-flow engine described in commonly-assigned U.S. Pat. App. Pub. No. 2011/0056208. In alternative embodiments, the engine 10 need not produce flow-reversal (i.e., no flow in a forward direction is required). In addition, further embodiments can include additional engine sections.

In the illustrated embodiment, the low pressure compressor section 14 and the low pressure turbine section 16 are rotationally linked by a shaft (or shaft assembly) 24 to form a low pressure spool. Rotation of the low pressure turbine section 16 rotates the low pressure compressor section 14 through torque transmission by the shaft 24. Furthermore, in the illustrated embodiment, the fan section 12 is rotationally coupled to the low pressure spool (specifically the low pressure compressor section 14) through a gearbox 26 containing suitable gearing to allow torque transmission from the low pressure compressor section 14 to the fan section 12 and allowing the fan section 12 to rotate at a different speed than the low pressure compressor section 14. In further embodiments, the gearbox 26 can be omitted, such as by substituting a direct shafted connection. Moreover, in further embodiments additional engine spools (e.g., a medium pressure spool) can be provided. The engine 10 defines a centerline axis C_{L} about which the fan section 12, the low pressure compressor 14, the low pressure turbine 16 and the shaft 24 all can rotate.

The fan section 12 can draw fluid (e.g., ambient air) into the engine 10 in an inlet flow F_{I}. A portion of the fluid of the inlet flow F_{I} can be diverted into the primary flowpath F_{P} and the remaining portion diverted into the bypass duct 22 in a bypass flowpath F_{B}. A ratio of fluid flow diverted to the bypass flowpath F_{B} compared to the primary flowpath F_{P} can vary for particular applications. For instance, the bypass flowpath F_{B} can be small or eliminated entirely as desired. In general, the fan section 12 can help move fluid through the bypass duct 22 in a bypass flowpath F_{B} at relatively low throttle levels to generate thrust in a manner that is relatively efficient for cruising (or "loitering") in aerospace applications.

Fluid in the primary flowpath F_{P} passes to the low pressure compressor 14, which compresses the fluid. Suitable ducting then delivers compressed fluid from the low pressure compressor 14 to the engine core assembly 18, which includes a plurality of discrete engine cores, as explained further below (only one engine core is visible in FIG. 1). Each discrete engine core generally includes a compressor section, a combustor, and a turbine section. The engine core assembly 18 can turn fluid in the primary flowpath F_{P} in different directions, including full or partial flow reversal, such that the primary flowpath F_{P} turns from generally rearward flow (to the right in FIG. 1) to generally forward flow (to the left in FIG. 1). The engine core assembly 18 can also generate combustion products using the compressed fluid. As explained further below, the engine core assembly 18 can operate in different modes that allow total output of the engine core assembly 18 to vary between different operational modes, which can facilitate decoupling operational efficiencies of the core assembly 18 and the fan section 12.

Exhaust fluid (e.g., combustion products) from the engine core assembly 18 in the primary flowpath F_{P} is directed to the low pressure turbine 16. In the illustrated embodiment, the primary flowpath F_{P} extends in a generally forward direction through the low pressure turbine 16. Fluid leaving the low pressure turbine 16 along the primary flowpath F_{P} passes through one or more exhaust pipes 28. In the illustrated embodiment, a plurality of circumferentially spaced exhaust pipes 28 are provided (only one pipe 28 is visible in FIG. 1) that turn fluid in the primary flowpath F_{P} to a generally rearward direction and exhaust that fluid into the bypass duct 22 (which in the illustrated embodiment can include an exhaust case or similar structure). The primary flowpath F_{P} and the bypass flowpath F_{B} can comingle in a combined exhaust flowpath F_{E} that can exit the engine 10 to facilitate thrust production. In alternative embodiments, the primary flowpath F_{P} could be exhausted from the engine 10 away from the bypass duct 22 and separate from the bypass flowpath F_{B}.

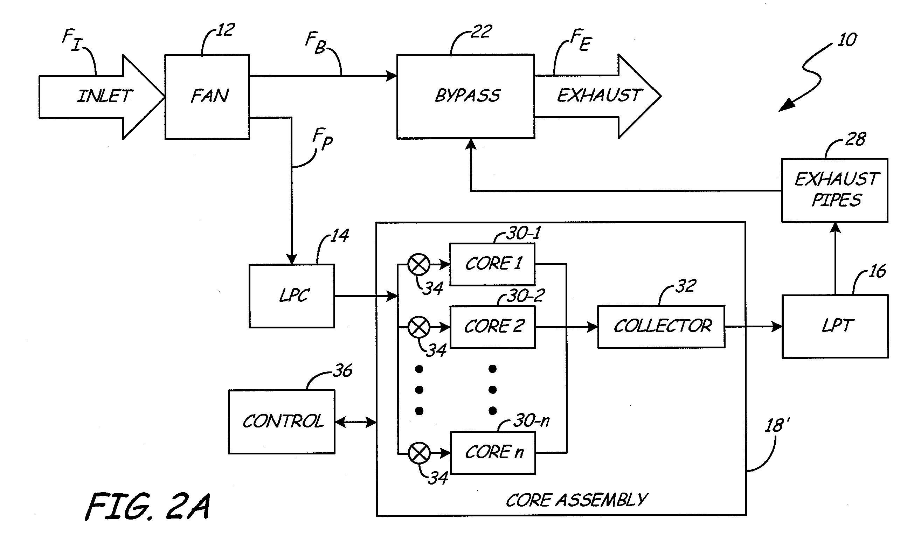

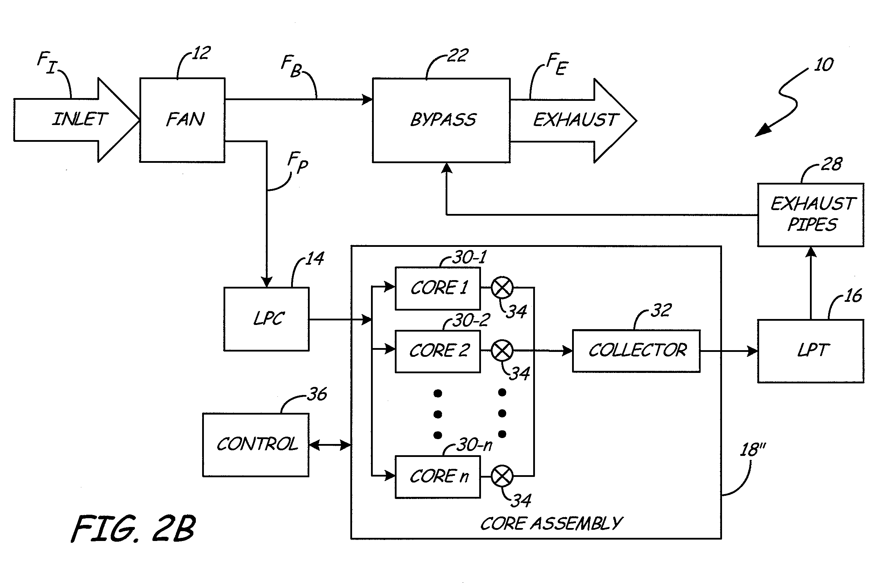

FIGS. 2A and 2B are block diagrams illustrating two different embodiments of the gas turbine engine 10. As shown in the embodiment of FIG. 2A, the core assembly 18' includes plurality of discrete engine cores 30-1 through 30-*n*, an exhaust collector 32, and a plurality of valves 34. A control 36 is also provided for controlling operation of the core assembly 18'. In one embodiment, the control 36 can be integrated with a full authority digital engine controller (FADEC) for the entire engine 10, or, in alternative embodiments, can be a stand-alone, dedicated controller. The valves 34 can be any suitable type of valves or similar mechanisms for controllably or selectably restricting or blocking fluid flow.

Each engine core 30-1 to 30-*n* includes a combustor (or burner) 38, a high pressure compressor 40 and a high pressure turbine 42. These components of one of the engine cores 30-1 to 30-*n* are shown in FIG. 1. The high pressure compressor 40 and the high pressure turbine 42 of each engine core 30-1 to 30-*n* can define a spool that can be linked by a suitable shaft, and which includes suitable blades, etc. Components of the engine cores 30-1 to 30-*n* can comprise ceramic materials, such as ceramic blades, in order to save weight and allow high temperature operation. The internal configuration of each individual engine core 30-1 to 30-*n* can be of any suitable type, such as with combustor and turbine sections configured for axial flow, radial flow, etc. The high pressure compressor 40 can accept compressed fluid from the low pressure compressor 14, and passes fluid on to the combustor 38, which can initiate and sustain combustion. Exhaust from each combustor 38 is passed to the corresponding high pressure turbine 42. Each of the engine cores 30-1 to 30-*n* can have a similar or identical internal configuration. Furthermore, the engine cores 30-1 to 30-*n* can be relatively small in size, such that in some embodiments all of the engine cores 30-1 to 30-*n* together occupy no more space than a core of a typical single-core gas turbine engine. The engine cores 30-1 to 30-*n* can be arranged in various ways about the centerline axis C_{L}, such as with the engine cores 30-1 to 30-*n* generally circumferentially spaced from each other. Example arrangements of the engine cores 30-1 to 30-*n* are described further below.

The engine core assembly 18' can be selectively operated in different modes. In a first mode suitable for relatively high power output, all of the engine cores 30-1 to 30-*n* are activated and operational to accept fluid from the primary flowpath F_{P} and to generate combustion products. In this first mode, the control 36 can command all of the valves 34 to allow fluid to pass to all of the engine cores 30-1 to 30-*n*. In a second mode suitable for relatively low power output, one or more of the engine cores 30-1 to 30-*n* are inactive (i.e., idle) while at least one of the remaining engine cores 30-1 to 30-*n* is still active and operational. In this way, the control 36 can select an operating mode of the engine core assembly 18' to match desired power (or thrust) output. For instance, in an aerospace setting, the first mode can be used to operate all of the engine cores 30-1 to *30-n* to generate large amounts of power for a takeoff maneuver, and the second mode can be used to operate only a fractional number of the available engine cores 30-1 to *30-n* for cruising at lower power levels. The particular number of engine cores 30-1 to 30-*n* that are operational in the second mode can vary as desired for particular applications. For instance, in an embodiment where the engine core assembly 18' includes a total of six engine cores, the second mode can utilize three active, operational cores and have three cores idle (i.e., an active to idle core ratio of 1:1). In another embodiment where the engine core assembly 18' includes a total of six engine cores, the second mode can alternatively utilize two active, operational cores and have four cores idle (i.e., an active to idle core ratio of 1:2). In yet another embodiment, only a single core is active and operational in the second mode, while more than one core is operational in the first mode. Nearly any possible ratio of active to idle cores is possible in the second mode. The ratio selected can vary depending on factors such as desired power output, desired fuel efficiency, aircraft weight and design, core sizes, etc. Furthermore, it is possible to provide additional operational modes to provide a variety of power output levels. In addition, the particular engine cores 30-1 to 30-*n* that are active in the second mode can be varied over time to more equally balance usage time among all of the engine cores 30-1 to 30-*n*.

Fluid flow along the primary flowpath F_{P} can be divided into subflows that pass through some or all of the engine cores 30-1 to 30-*n* of the engine core assembly 18'. In the first mode, the primary flowpath F_{P} is divided into *n* subflows to pass through all of the engine cores 30-1 to 30-*n*. In the second mode, the primary flowpath F_{P} is divided into *n-x* subflows to pass through only *n-x* active, operational engine cores, while not passing through x inactive, idle engine cores (where *x* < *n*)*.* In order to place one or more of the engine cores 30-1 to 30-*n* in an inactive, idle state, fluid flow is controlled by the valves 34. Selected valves 34 corresponding to active, operational engine cores can be opened to permit fluid flow, and valves corresponding to inactive, idle engine cores can be closed to block fluid flow. In the embodiment shown in FIG. 2A, the valves 34 are located upstream from the engine cores 30-1 to 30-*n*, while in the embodiment of the engine core assembly 18" shown in FIG. 2B the valves 34 are located downstream from the engine cores 30-1 to 30-*n*. Those of ordinary skill in the art will recognize that the valves 34 can be placed in any suitable location as desired for particular applications. Furthermore, while the illustrated embodiments show one valve 34 associated with each of the engine cores 30-1 to 30-*n*, in further embodiments the valves 34 can be provided for only a portion of the engine cores 30-1 to 30-*n* that are inactive and idle in any of the possible operational modes (e.g., the second mode) and omitted for the remaining engine cores 30-1 to 30-*n*. When the valves 34 restrict flow to some of the engine cores 30-1 to 30-*n*, operational speed of the fan section 12, etc. can be adjusted to provide suitable fluid flow and pressurization for the number of active, operational engine cores 30-1 to 30-*n.*

Operational modes, such as the second mode described above, allow the active, operational engine cores to operate at relatively efficient levels. For instance, the operational engine cores can operate at relatively high temperatures and pressures. In one embodiment, the engine cores operational in the second mode can operate at approximately peak thermal efficiency. In this way, overall engine power output can be selectively adjusted by selecting the number of operational engine cores while those engine cores that are active and operational maintain operational speeds, temperatures, pressures and other operational parameters within a relatively narrow and desirable range. In other words, overall engine power can be varied over large ranges in ways not directly proportional to relatively small variations in operating conditions of individual ones of the engine cores 30-1 to 30-*n*, which can remain at optimal or near optimal conditions whenever they are active and operational. This allows operational efficiencies of the engine cores 30-1 to 30-*n* and the engine core assembly 18' as a whole to be effectively decoupled from operational efficiency of the fan section 12. Trade-offs between operational efficiencies of the fan section 12 and the engine cores 30-1 to 30-*n* can thereby be reduced or eliminated.

Furthermore, the engine cores 30-1 to 30-*n* can be used as "commodity cores" where new or different engines meeting various power requirements and thrust classes can be provided by simply modifying the number of engine cores 30-1 to 30-*n* included in a given engine, where those engine cores 30-1 to 30-*n* are identical and have already been designed, tested and validated. This may eliminate a need to design, test and validate the individual cores 30-1 to 30-*n* for use in the new engine.

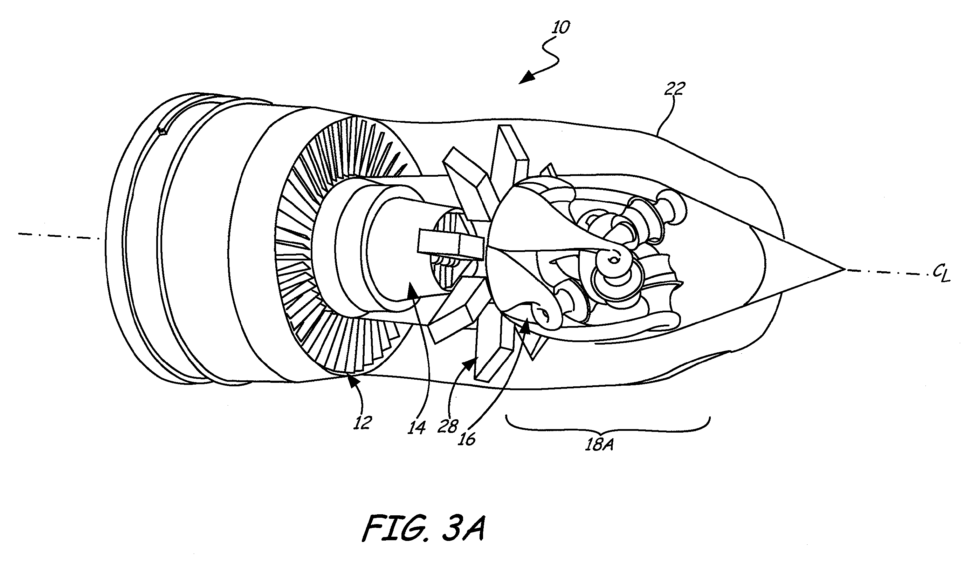

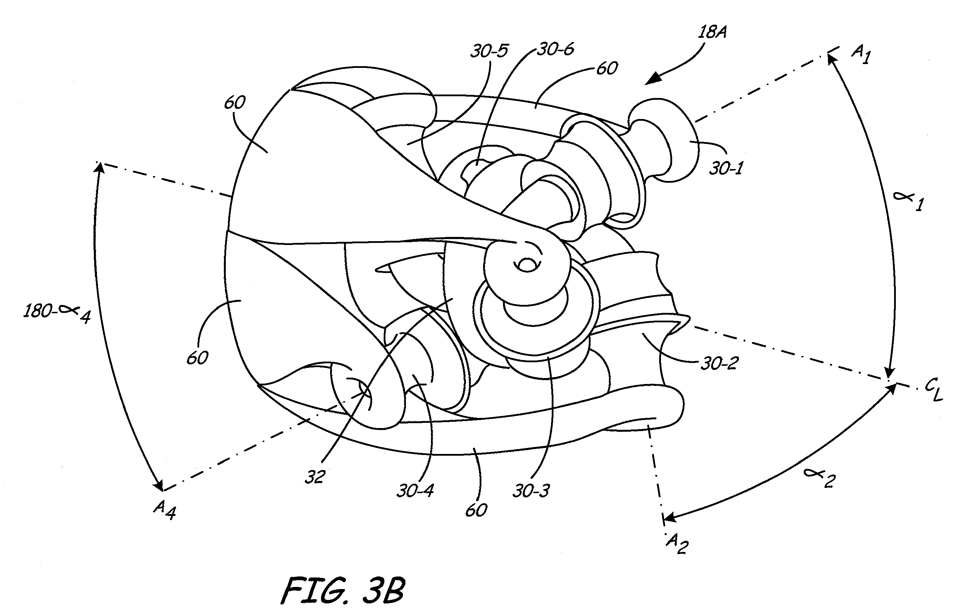

FIG. 3A is a partial cross-section perspective view of the gas turbine engine 10 having one embodiment of a core assembly 18A, and FIG. 3B is an enlarged perspective view of the core assembly 18A shown in isolation. The core assembly 18A includes six engine cores 30-1 to 30-6 (not all are fully visible in FIGS. 3A and 3B). In the illustrated embodiment, the engine cores 30-1 to 30-6 have different orientations relative to the engine centerline C_{L}. Each engine core 30-1 to 30-6 has an associated core axis A₁-A₆, respectively, oriented at an angle α₁-α₆ with respect to the centerline axis C_{L} (for simplicity, only the axes A₁, A₂ and A₄ and the angles α₁, α₂ and α₄ are shown in FIG. 3B). For example, the angles α₁-α₆ can each be approximately 20° in one embodiment, though nearly any other angle is possible in further embodiments. The particular values of the angles α₁-α₆ can be selected as a function of the number of engine cores 30-1 to 30-*n* and/or other factors, as desired for particular applications. Indeed, in alternative embodiments, the core axes A₁-A₆ can be arranged parallel to and spaced from the centerline axis C_{L}. The core axes A₁-A₆ are the axes of rotation of blades and other associated rotatable components of the respective engine core 30-1 to 30-6, and can be defined by shafts of the cores 30-1 to 30-6. Rotation of components of active, operational ones of the engine cores 30-1 to 30-6 can be driven by compressed fluid flow from an associated one of the subflows of the primary flowpath F_{P} and the generation of combustion products by an associated combustor 38. It should be noted that rotation of components of the engine cores 30-1 to 30-6 is generally not linked to rotation of components of the fan section 12, the low pressure compressor section 14 or the low pressure turbine section 16 by shafts or the like. Moreover, it should be noted that the engine cores 30-1 to 30-6 as a whole can be rotationally fixed relative to the centerline axis C_{L}, in the sense that components within each of the cores 30-1 to 30-6 can rotate about the respective core axes A₁-A₆ while those core axes A₁-A₆ can remain rotationally stationary with respect to the centerline axis C_{L}

Six supply ducts 60 (not all are clearly visible in FIGS. 3A and 3B) are provided in the illustrated embodiment that can supply discrete and isolated subflows of the primary flowpath F_{P} to each of the engine cores 30-1 to 30-6. Each of the supply ducts 60 can have a suitable shape to a given direct fluid subflow to the associated engine core 30-1 to 30-6.

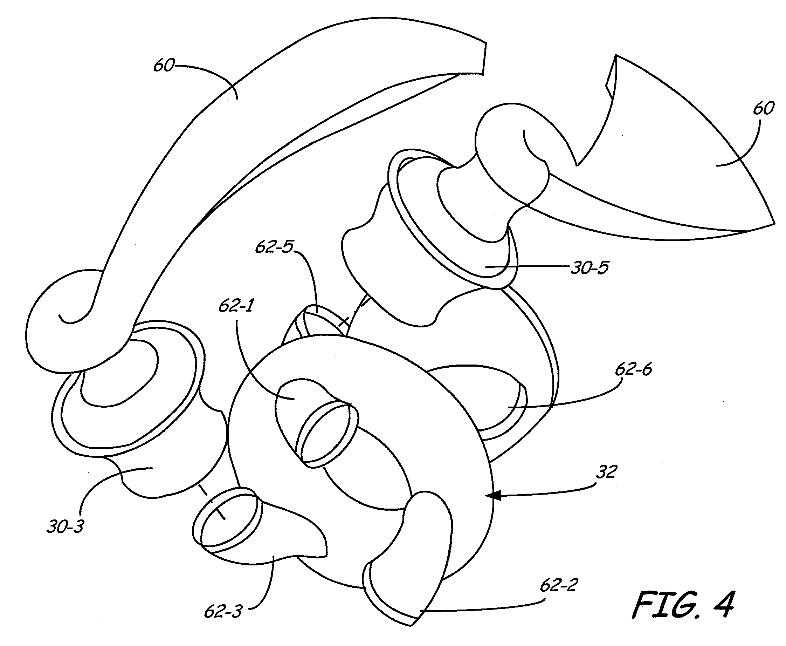

Exhaust fluid leaving all of the engine cores 30-1 to 30-*n* is collected in the exhaust collector 32. FIG. 4 is an exploded perspective view of portions of the core assembly 18, showing one embodiment of the exhaust collector 32 of the core assembly 18 (or 18A, 18B). Each engine core 30-1 to 30-*n* passes fluid into the exhaust collector 32 through an associated inlet structure 62-1 to 62-*n*. In the illustrated embodiment, the exhaust collector 32 has a generally toroidal shape and defines a generally toroidal interior volume, in which generally annular fluid flows can circulate and mix. The engine cores 30-1 to 30-*n* can each distribute exhaust fluid subflows (of the primary flowpath F_{P}) to the exhaust collector 32 in a substantially tangential direction, such that exhaust subflows can enter the interior volume of the exhaust collector 32 tangentially and can flow circumferentially (or annularly) within the interior volume. The subflows can enter the exhaust collector at or near an outer diameter of the collector 32. Exhaust flows from any of the engine cores 30-1 to 30-*n* can comingle and mix within the interior volume of the exhaust collector 32. In this way, all of the subflows of the primary flowpath F_{P} can combine in the exhaust collector 32, which also acts like a buffer of sorts to handle exhaust from a varying number of the engine cores 30-1 to 30-*n*. The exhaust collector 32 further includes an outlet that in the illustrated embodiment is in fluid communication with the low pressure turbine section 16, such as with suitable ducting (e.g., an annular duct). In the illustrated embodiment, the exhaust collector 32 is adjacent to and upstream of the low pressure turbine section 16 along the primary flowpath F_{P}. The outlet of the exhaust collector 32 can be located at or near its inner diameter.

In the embodiment shown in FIGS. 3A and 3B, three of the engine cores 30-1, 30-2 and 30-3 are positioned at a rear or aft side of the exhaust collector 32 and three of the engine cores 30-4, 30-5 and 30-6 are positioned at a front or forward side of the exhaust collector 32. In one embodiment, the engine cores 30-1, 30-2 and 30-3 can operate as a common bank or set and the engine cores 30-4, 30-5 and 30-6 can operate as another bank or set, such that all of the engine cores in each bank or set are active and operational or idle for a given operational mode. In this way, in the second operational mode discussed above (i.e., relatively low power operation), all of the engine cores 30-1, 30-2 and 30-3 in the bank or set at the rear or aft side of the exhaust collector 32 can be inactive and idle while all of the engine cores 30-4, 30-5 and 30-5 in the bank or set at the front or forward side of the exhaust collector 32 can be active and operational, or vice-versa. It should be understood that other configurations and operational schemes are possible, such as where engine cores on both the forward and aft sides of the exhaust collector 32 are inactive and idle in the second mode.

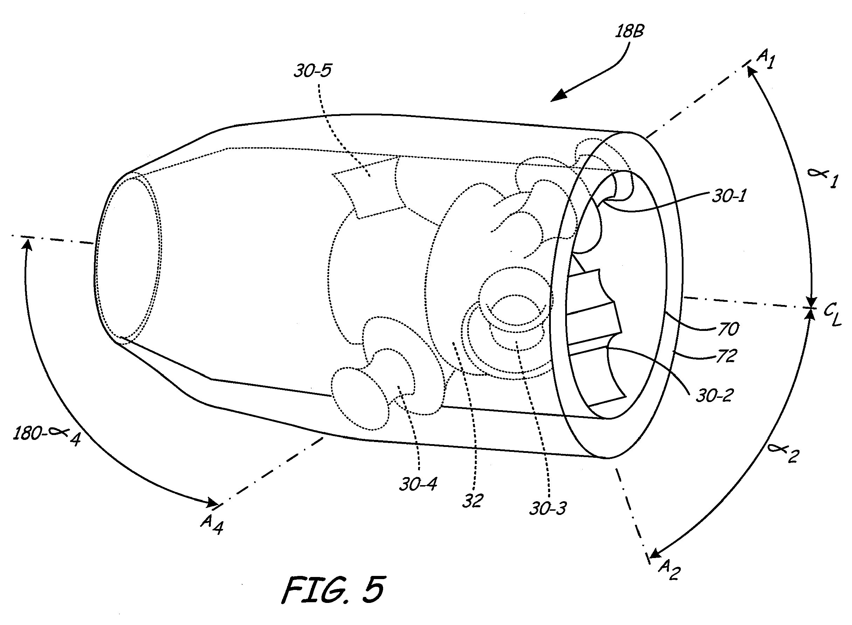

FIG. 5 is a perspective view of another embodiment of an engine core assembly 18B. The core assembly 18B can operate generally similarly to the embodiment of the assembly 18A discussed above, and includes most of the same components. However, instead of the discrete supply ducts 60 of the assembly 18A, the core assembly 18B of the illustrated embodiment includes a generally annular plenum defined by an inner wall 70 and an outer wall 72. The plenum can accept compressed fluid from the low pressure compressor section 14, and distributes that fluid to the engine cores 30-1 to 30-*n*. In the illustrated embodiment, six engine cores 30-1 to 30-6 are provided (not all are visible in FIG. 5). The inner wall 70 can include suitable openings to allow fluid to pass through to the engine cores 30-1 to 30-6, which can be positioned radially inward from the plenum and the inner wall 70. In this way the plenum provides a "piccolo" configuration. Use of the plenum shown in FIG. 5 has the advantage of reducing undesired fluid reflection and can help associated containment structures maintain their shapes at relatively high temperature and pressure conditions. Subflows of the primary flowpath F_{P} are formed as fluid enters individual engine cores 30-1 to 30-6.

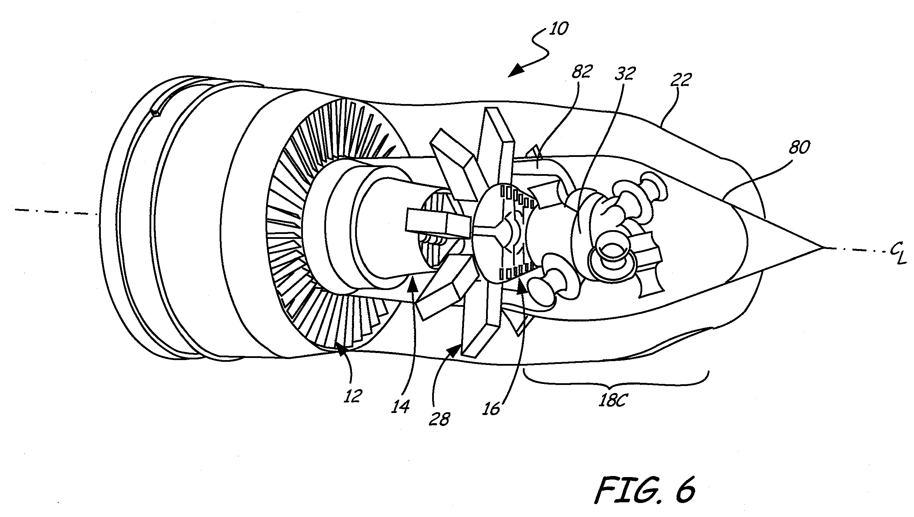

FIG. 6 is a perspective view of the gas turbine engine 10 having yet another embodiment of a core assembly 18C. The core assembly 18C includes a plurality of engine cores 30-1 to 30-*n*. Fluid from the low pressure compressor section 14 is delivered to a plenum defined by a wall 80 by an annular duct 82. In the illustrated embodiment, the wall 80 defines an inner boundary of the duct 22, and the wall 80 has a conically shaped aft portion. As shown in FIG. 6, the engine cores 30-1 to 30-*n* accept fluid from the plenum, and exhaust fluid to the low pressure turbine section 16 through the exhaust collector 32. Subflows of the primary flowpath F_{P} are formed as fluid enters individual engine cores 30-1 to 30-*n*.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims. For example, further embodiments of the present invention could include greater or lesser numbers of engine spools, and can include additional components not specifically discussed, such as thrust augmenters. For example, a multiple core engine according to the present invention can have any desired configuration, such as a fan-high configuration with no low pressure compressor section, a geared engine configuration with a fan and low pressure compressor sections driven by a low pressure turbine section, a three spool configuration with a fan driven by a low pressure turbine section and a low compressor section driven by an intermediate turbine section, a geared three spool configuration with a reduction gear between a low pressure turbine section and a fan, etc. Moreover, while the invention has been described primarily with respect to a reverse-flow engine configuration, an engine according to the present invention need not produce flow reversal (i.e., flow in a forward direction).

## Claims

1. A gas turbine engine system (10) comprising:
a fan assembly (12);
a low pressure compressor (14);
a low pressure turbine (16) coupled to the low pressure compressor, wherein a primary flowpath (Fₚ) is defined through the fan assembly, the low pressure compressor and the low pressure turbine;
a plurality of engine cores (30-1 to 30-n) including a first engine core and a second engine core, the engine cores positioned such that each active engine core is operably positioned between the low pressure compressor and the low pressure turbine along the primary flowpath, each engine core including:
a high pressure compressor (40);
a combustor (38) downstream from the high pressure compressor; and
a high pressure turbine (42) downstream from the combustor;
a control assembly (36) configured to control operation of the plurality of engine cores such that in a first operational mode the first and the second engine cores are active to generate combustion products, and in a second operational mode the first engine core is active to generate combustion products while the second engine core is idle;
an exhaust collector (32) defining a substantially toroidal interior volume, wherein exhaust from all active engine cores is delivered to the exhaust collector;
wherein the plurality of engine cores deliver combustion products to the exhaust collector in a tangential orientation to produce an annular exhaust mixing flow.

2. The system of claim 1, further comprising:
an exhaust pipe (28) configured to accept exhaust from the exhaust collector and direct an exhaust flow to a rearward flow direction; and
preferably a bypass duct (22), wherein exhaust from the exhaust pipe and fluid from the fan assembly are directed through the bypass duct.

3. The system of claim 1 or 2, wherein the plurality of engine cores include ceramic components.

4. The system of any preceding claim, further comprising:
gearing (26) operably connected between the fan assembly and the low pressure compressor to transmit torque such that the fan assembly is rotationally powered by torque transmitted from the low pressure compressor; and
preferably a generally annular plenum (70, 72) operatively located along the primary flowpath downstream of the low pressure compressor, wherein generally annular plenum is configured to distribute compressed fluid to the plurality of engine cores.

5. A method of operating a gas turbine engine (10) comprising:
drawing air into the engine with a fan assembly (12);
compressing at least a portion of the air drawn in by the fan assembly;
passing at least a portion of the compressed air through all of a plurality of engine cores (30-1 to 30-n) during a first operational mode, each engine core including a combustor (38) and a plurality of blades, wherein all of the combustors are operative to generate combustion products in the first operational mode;
passing at least a portion of the compressed air through a first set of one or more of the plurality of engine cores while restricting passage of compressed air through a second set of the remaining one or more of the plurality of engine cores during a second operational mode, wherein only the combustors of the first set of one or more of the plurality of engine cores are operative to generate combustion products in the second operational mode while the combustors of the second set of the remaining one or more of the plurality of engine cores are idle;
collecting exhaust from all operational engine cores with a toroidal collector (32);
distributing exhaust subflows from all operational engine cores to the toroidal exhaust collector in a tangential direction; and
directing exhaust from the collector to an outlet stream to exit the engine.

6. The method of claim 5, further comprising:
actuating one or more valves (34) to control delivery of the compressed air to the second set of the remaining one or more of the plurality of engine cores;
wherein preferably actuation of the one or more valves is controlled as a function of an engine throttle command; and/or
preferably all of the one or more operational engine cores are located at a first side of the collector, and wherein the remaining engine cores are located at a second side of the collector opposite the first side.

7. The method of claim 5 or 6, wherein the collector mixes exhaust from all of the operational engine cores in an annular mixing flow.

## Patentansprüche

1. Gasturbinenmotorsystem (10), umfassend:
eine Lüfterbaugruppe (12);
einen Niederdruckverdichter (14);
eine Niederdruckturbine (16), die mit dem Niederdruckverdichter verbunden ist, wobei ein primärer Strömungsweg (Fₚ) durch die Lüfterbaugruppe, den Niederdruckverdichter und die Niederdruckturbine definiert ist;
eine Vielzahl von Motorkernen (30-1 bis 30-n), die einen ersten Motorkern und einen zweiten Motorkern umfasst, wobei die Motorkerne derart positioniert sind, dass jeder aktive Motorkern betriebsfähig entlang des Strömungswegs zwischen dem Niederdruckverdichter und der Niederdruckturbine positioniert ist, wobei jeder Motorkern Folgendes beinhaltet:
einen Hochdruckverdichter (40);
eine Brennkammer (38) stromabwärts vom Hochdruckverdichter; und
eine Hochdruckturbine (42) stromabwärts von der Brennkammer;
eine Steuerungsbaugruppe (36), die konfiguriert ist, um den Betrieb der Vielzahl von Motorkernen derart zu steuern, dass in einem ersten Betriebsmodus der erste und der zweite Motorkern aktiv sind, um Verbrennungsprodukte zu erzeugen, und in einem zweiten Betriebsmodus der erste Motorkern aktiv ist, um Verbrennungsprodukte zu erzeugen, während der zweite Motorkern im Leerlauf ist;
einen Abgaskollektor (32), der ein im Wesentlichen ringförmiges Innenvolumen definiert, wobei Abgas von allen aktiven Motorkernen dem Abgaskollektor zugeführt wird;
wobei die Vielzahl von Motorkernen Verbrennungsprodukte in tangentialer Ausrichtung dem Abgaskollektor zuführen, um eine ringartige Abgasmischströmung zu erzeugen.

2. System nach Anspruch 1, ferner umfassend:
ein Abgasrohr (28), das konfiguriert ist, um Abgas von einem Abgaskollektor aufzunehmen und eine Abgasströmung in eine nach hinten gerichtete Strömungsrichtung zu leiten; und
vorzugsweise eine Umgehungsleitung (22), wobei Abgas vom Abgasrohr und Fluid von der Lüfterbaugruppe durch die Umgehungsleitung geleitet wird.

3. System nach Anspruch 1 oder 2, wobei die Vielzahl von Motorkernen Keramikkomponenten beinhaltet.

4. System nach einem der vorangehenden Ansprüche, ferner umfassend:
ein Getriebe (26), das betriebsfähig zwischen der Lüfterbaugruppe und dem
Niederdruckverdichter verbunden ist, um Drehmoment derart zu übertragen, dass die
Lüfterbaugruppe rotierend durch Drehmoment angetrieben wird, das vom Niederdruckverdichter übertragen wird; und
vorzugsweise einen ringartigen Verteilerschacht (70, 72), der sich betriebsfähig entlang des primären Strömungspfads stromabwärts vom Niederdruckverdichter befindet, wobei der allgemein ringförmige Verteilerschacht konfiguriert ist, um Druckfluid an die Vielzahl an Motorkernen zu verteilen.

5. Verfahren für den Betrieb eines Gasturbinenmotors (10), umfassend:
Ansaugen von Luft in den Motor mit einer Lüfterbaugruppe (12);
Verdichten wenigstens eines Teils der Luft, die durch die Lüfterbaugruppe angesaugt wurde;
Durchlassen wenigstens eines Teils der Druckluft durch alle einer Vielzahl von Motorkernen (30-1 bis 30-n) während eines ersten Betriebsmodus, wobei jeder Motorkern eine Verbrennungskammer (38) und eine Vielzahl von Schaufeln beinhaltet, wobei alle der Verbrennungskammern betrieben werden können, um Verbrennungsprodukte im ersten Betriebsmodus zu erzeugen;
Durchlassen wenigstens eines Teils der Druckluft durch einen ersten Satz von einem oder mehreren der Vielzahl an Motorkernen, während das Durchlassen von Druckluft durch einen zweiten Satz des/der verbleibenden einen oder mehreren der Vielzahl an Motorkernen während eines zweiten Betriebsmodus eingeschränkt wird, wobei nur die Verbrennungskammern des ersten Satzes des einen oder der mehreren der Vielzahl an Motorkernen betrieben werden können, um Verbrennungsprodukte im zweiten Betriebsmodus zu erzeugen, während sich die Verbrennungskammern des zweiten Satzes des verbleibenden einen oder mehreren der Vielzahl an Motorkernen im Leerlauf befindet;
Sammeln von Abgas von allen betriebsfähigen Motorkernen mit einem ringförmigen Kollektor (32);
Verteilen von Abgasnebenströmungen von allen betriebsfähigen Motorkernen zum ringförmigen Abgaskollektor in einer tangentialen Richtung; und
Leiten von Abgas vom Kollektor zu einem Auslassstrom, um den Motor zu verlassen.

6. Verfahren nach Anspruch 5, ferner umfassend:
Betätigen eines oder mehrerer Ventile (34), um die Zufuhr der Druckluft zum zweiten Satz des/der verbleibenden einen oder mehreren der Vielzahl an Motorkernen zu steuern;
wobei das Betätigen des einen oder der mehreren Ventile vorzugweise abhängig von einem Motordrosselbefehl gesteuert wird; und/oder
sich vorzugsweise alle des einen oder der mehreren betriebsfähigen Motorkerne an einer ersten Seite des Kollektors befinden und wobei sich die verbleibenden Motorkerne an einer zweiten Seite des Kollektors gegenüber der ersten Seite befinden.

7. Verfahren nach Anspruch 5 oder 6, wobei der Kollektor Abgas von allen der betriebsfähigen Motorkerne in einer ringartigen Mischströmung mischt.

## Revendications

1. Système à turbine à gaz (10) comprenant :
un ensemble de ventilation (12) ;
un compresseur à basse pression (14) ;
une turbine à basse pression (16) couplée au compresseur basse pression, une voie d'écoulement primaire (Fₚ) étant définie à travers l'ensemble de ventilation, le compresseur basse pression et la turbine basse pression ;
une pluralité de noyaux de moteur (30-1 à 30-n) comprenant un premier noyau de moteur et un deuxième noyau de moteur, les noyaux de moteur étant positionnés de sorte que chaque noyau de moteur actif est positionné en fonctionnement entre le compresseur basse pression et la turbine basse pression le long de la voie d'écoulement primaire, chaque noyau de moteur comprenant :
un compresseur à haute pression (40) ;
une chambre de combustion (38) située en aval du compresseur à haute pression ; et
une turbine à haute pression (42) en aval de la chambre de combustion ;
un ensemble de commande (36) conçu pour commander le fonctionnement de la pluralité de noyaux de moteur de sorte que dans un premier mode de fonctionnement, les premier et deuxième noyaux de moteur sont actifs pour produire des produits de combustion, et dans un deuxième mode de fonctionnement, le premier noyau de moteur est actif pour produire des produits de combustion tandis que le deuxième noyau de moteur est désactivé ;
un collecteur de gaz d'échappement (32) définissant un volume intérieur sensiblement toroïdal, les gaz d'échappement issus de tous les noyaux de moteur actifs étant conduits jusqu'au collecteur de gaz d'échappement ;
la pluralité de noyaux de moteur conduisant les produits de combustion jusqu'au collecteur de gaz d'échappement selon une orientation tangentielle, afin de produire un flux annulaire de mélange d'échappement.

2. Système selon la revendication 1, comprenant en outre :
un tuyau d'échappement (28) conçu pour accepter des gaz d'échappement depuis le collecteur d'échappement et pour diriger un flux d'écoulement vers une direction d'écoulement dirigée vers l'arrière ; et
de préférence une conduite de dérivation (22), l'échappement issu du tuyau d'échappement et le fluide issu de l'ensemble de ventilation sont dirigés à travers la conduite de dérivation.

3. Système selon la revendication 1 ou 2, dans lequel la pluralité de noyaux de moteur comprennent de la céramique.

4. Système selon l'une quelconque des revendications précédentes, comprenant en outre :
un engrenage (26) relié en fonctionnement entre l'ensemble de ventilation et le compresseur basse pression pour transmettre un couple de sorte que l'ensemble de ventilation est mis en rotation par un couple transmis depuis le compresseur basse pression ; et
de préférence, un collecteur globalement annulaire (70, 72) situé en fonctionnement le long du flux primaire d'écoulement en aval du compresseur basse pression, le collecteur globalement annulaire étant conçu pour distribuer du fluide comprimé vers la pluralité de noyaux de moteur.

5. Procédé d'utilisation d'une turbine à gaz (10), comprenant :
l'aspiration d'air dans le moteur avec un l'ensemble de ventilation (12) ;
la compression d'au moins une partie de l'air aspiré dans l'ensemble de ventilation ;
le passage d'au moins une partie de l'air comprimé à travers l'ensemble d'une pluralité de noyaux de moteur (30-1 à 30-n) pendant un premier mode de fonctionnement, chaque noyau de moteur contenant une chambre de combustion (38) et une pluralité d'ailettes, l'ensemble des chambres de combustion permettant de produire des produits de combustion dans le premier mode de fonctionnement ;
le passage d'au moins une partie de l'air comprimé à travers un premier ensemble d'au moins un des noyaux de moteur de la pluralité de noyaux de moteur avec restriction du passage d'air comprimé à travers un deuxième ensemble d'au moins un de moteur résiduel de la pluralité de noyaux de moteur pendant un deuxième mode de fonctionnement, seules les chambres de combustion du premier ensemble d'au moins un noyau de moteur de la pluralité de noyaux de moteur étant opérationnels pour produire des produits de combustion dans le deuxième mode de fonctionnement pendant que les chambres de combustion du deuxième ensemble d'au moins un noyau de moteur résiduel de la pluralité de noyaux de moteur sont désactivées ;
la collecte de gaz d'échappement depuis tous les noyaux de moteur en fonctionnement à l'aide d'un collecteur toroïdal (32) distribuant des sous-flux de gaz d'échappement depuis tous les noyaux de moteur en fonctionnement vers le collecteur toroïdal d'échappement dans une direction tangentielle ; et
l'acheminement des gaz d'échappement du collecteur vers un flux de sortie pour qu'ils quittent le moteur.

6. Procédé selon la revendication 5, comprenant en outre :
l'actionnement d'au moins une soupape (34) pour réguler l'apport de l'air comprimé dans le deuxième ensemble formé par l'au moins un des noyaux de moteur résiduels de la pluralité de noyaux de moteur ;
l'actionnement de l'au moins une soupape étant de préférence commandé en fonction d'une commande de papillon de moteur ; et/ou
l'ensemble des au moins un des noyaux de moteur étant de préférence situés au niveau d'un premier côté du collecteur, et les autres noyaux de moteur étant situés au niveau d'un deuxième côté du collecteur à l'opposé du premier côté.

7. Procédé selon la revendication 5 ou 6, dans lequel le collecteur mélange les gaz d'échappement issus de tous les noyaux de moteur en fonctionnement dans un flux annulaire de mélange.
